# EUROPÄISCHE PATENTSCHRIFT

(11) **EP 3 057 774 B1**
(45) Veröffentlichungstag und Bekanntmachung des Hinweises auf die Patenterteilung: **29.11.2017**
(21) Anmeldenummer: 14793028.3
(22) Anmeldetag: 14.10.2014
(51) Int. Cl.: B29C 65/56, B29D 1/00, B29C 65/00, B29C 70/22, B29L 1/00

(54) **BAUTEIL MIT EINEM BEFESTIGUNGSBEREICH FÜR EINE SCHRAUBVERBINDUNG SOWIE FORMTEIL UND BEFESTIGUNGSTEIL**
COMPONENT HAVING A FASTENING REGION FOR A THREADED CONNECTION, MOLDED PART, AND FASTENING PART
PIÈCE MUNIE D'UNE PARTIE FIXATION PERMETTANT UN ASSEMBLAGE PAR VIS ET PIÈCE MOULÉE ET ÉLÉMENT DE FIXATION

(30) Priorität: 14.10.2013 DE 102013220718
(43) Veröffentlichungstag der Anmeldung: 24.08.2016
(73) Patentinhaber: Baier & Michels GmbH und Co. KG, 64372 Ober-Ramstadt (DE)
(72) Erfinder: AMBROS, Olaf, 68647 Biblis (DE)
(74) Vertreter: Sommer, Peter
(86) Internationale Anmeldenummer: PCT/EP2014/071960
(87) Internationale Veröffentlichungsnummer: WO 2015/055614

(56) Entgegenhaltungen:
- DE-A1- 19 849 822

## Beschreibung

### Technisches Gebiet

Die Erfindung betrifft ein Bauteil mit einem Befestigungsbereich für eine Schraubverbindung, wobei das Bauteil eine Fläche mit in mindestens einer Lage in eine Matrix aus einem Binder eingebettetes und eingebundenes Fasermaterial aufweist, wobei das Fasermaterial einen Faserverlauf im wesentlichen parallel zu der Fläche aufweist, wobei die Fläche eine Befestigungsöffnung mit einer in einem Winkel zur Fläche angeordneten Mittelachse aufweist und wobei die Befestigungsöffnung für ein Innengewinde vorgesehen ist.

Weiterhin betrifft die Erfindung ein Formteil für eine Schraubverbindung aus einem Fasermaterial wie endlosfaserverstärktem ungehärtetem duroplastischen Material oder einem Gewebe, Gewirke oder Gestricke, das in eine Matrix einbindbar ist.

Noch ein weiterer Gegenstand der Erfindung ist ein aus dem Formteil gebildetes Bauteil oder ein Befestigungsteil für Bauteile.

### Stand der Technik

Eine Direktverschraubung, also ein Einschraubvorgang, bei dem ein mit einem gewindeerzeugenden Außengewinde versehenes Bauteil, z.B. eine Schraube, in eine Befestigungsöffnung eines Mutternwerkstoff ein Gewinde einbringt, führt bei einem Bauteil, das eine Fläche mit in mindestens einer Lage in eine Matrix aus einem Binder eingebettetes und eingebundenes Fasermaterial aufweist dazu, dass die in die Befestigungsöffnung eingreifenden Gewindeflanken des Außengewindes seitlich in das Fasermaterial eindringen und die Fasern des Fasermaterials in Einschraubrichtung gesehen von einander ablösen.

Dies ist insbesondere bei nachträglich in CFK-Platten oder Carbon-Formteilen durch z.B. Bohren oder Wasserstrahlschneiden eingebrachten Bohrungen der Fall, wo es während der Direktverschraubung durch die Keilwirkung der zwischen die Fasern eindringenden Gewindespitzen an den Gewindeflanken zu Delaminierungen zwischen den einzelnen Fasern und der einbindenden Matrix kommt, was im Lastfall zu einer Zerstörung der Verbindung führen kann. Da es sich in der Regel um sehr dünnwandige Bauteile handelt, sind die Einschraubtiefen nur sehr gering und nur geringe Auszugskräfte oder Überdrehmomente realisierbar.

Aus der DE 10 2004 046 559 A1 ist ein Befestigungsmittel zur Befestigung eines Bauteils an einem Trägerelement, z.B einem Blech, einem Kunststoff- oder Druckgussteil bekannt, wobei das Trägerelement einen einfachen Durchzug ohne Gewinde aufweist, in den eine Doppelgewindeschraube mit einem selbstschneidenden oder selbstfurchenden Gewinde beim Einschrauben das zur Befestigung benötigte Gewinde in dem Durchzug erzeugt. Derartige Außengewinde erzeugen beim Einschrauben in eine Befestigungsbohrung ein entsprechendes Gegengewinde.

Aus der DE 20 2011 103 246 U1 ist bekannt, bei Kunststoffbauteilen zur Herstellung einer Schraubverbindung Metallbuchsen mit Innengewinden mit einen Kunststoffdom zu umspritzen oder in einen Dom einzupressen. Dazu wird die Buchse in das Spritzgießwerkzeug eingelegt.

Aus der DE 198 49 822 A1 ist ein Verfahren zur Herstellung von Schraubverbindungen bekannt, deren Teile wenigstens teilweise aus einem faserverstärkten Kunststoff bestehen. Dabei werden der Faserverstärkung dienende textile Halbzeuge oder textile Vorformlinge verwendet.

Die Aufgabe der Erfindung besteht darin, in einem Bauteil, das eine Fläche mit in mindestens einer Lage in eine Matrix aus einem Binder eingebettetes und eingebundenes Fasermaterial und eine Befestigungsöffnung aufweist, eine Verschraubung zu ermöglichen, dass das Fasermaterial des Bauteils weder durch die Gewindeerzeugung bei einer Direktverschraubung noch im Lastfall durch die Auszugskräfte auseinandergebracht.

Weiterhin soll ein vorgefertigtes aber noch nicht durch eine Matrix verfestigtes Formteil aus einem Fasermaterial bereitgestellt werden, wobei das Formteil nach dem Aushärten der Matrix mit Herstellung der Endfestigkeit für eine Gewindeerzeugung für eine Direktverschraubung oder für eine zerspanende Gewindeerzeugung geeignet ist und wobei das Fasermaterial im ausgehärteten Formteil darüber hinaus im Lastfall durch die Auszugskräfte nicht auseinandergebracht wird.

Schließlich soll unter Verwendung eines Formteils ein Bauteil oder ein Befestigungsteil für Bauteile bereitgestellt werden, das für eine Gewindeerzeugung für Verschraubung geeignet ist und dessen Fasermaterial darüber hinaus im Lastfall durch die Auszugskräfte nicht auseinandergebracht wird.

### Darstellung der Erfindung

Das erfindungsgemäße Bauteil mit einem Befestigungsbereich für eine Schraubverbindung weist eine Fläche mit in mindestens einer Lage in eine Matrix aus einem Binder eingebettetes und eingebundenes Fasermaterial auf, wobei das Fasermaterial einen Faserverlauf im wesentlichen parallel zu der Fläche aufweist. In der Fläche ist eine Befestigungsöffnung mit einer in einem Winkel zur Fläche angeordneten Mittelachse angeordnet, wobei die Befestigungsöffnung für ein Innengewinde einer Schraubverbindung vorgesehen ist. Im Bereich der Befestigungsöffnung erfolgt von der Fläche ausgehend eine Umlenkung des parallel zu der Fläche liegenden Fasermaterials derart, dass der Faserverlauf des Fasermaterials nach der Umlenkung in einem Winkel zur Fläche steht, der sich der Richtung der Mittelachse annähert. Darüber hinaus ist mit dem umgelenkten Fasermaterial ein Tubus ausgebildet.

Dieser Tubus kann beispielsweise als ein Fortsatz nach Art eines offenen Durchzugs ausgebildet sein oder kann als eine Fasermaterial aufweisende Ausformung, insbesondere als ein Sackloch ausgebildet sein.

Durch diese Ausgestaltung des Bauteils wird im Befestigungsbereich des Bauteils ein Einschraubpunkt mit einer vergrößerten Einschraubtiefe geschaffen und wegen des besonders ausgerichteten Verlaufs des Fasermaterials können höhere Drehmomente und Vorspannkräfte aufgenommen werden, ohne dass es zu einer weswentlichen Gewichtssteigerung kommen muss.

Durch die Umlenkung des Faserverlaufs wird beim Belasten des Innengewindes durch die Schraube der Faserverbund des Fasermaterials nicht mehr zwischen den Faserlagen des Fasermaterials belastet, sondern im besten Fall nur orthogonal zum Faserverlauf der Fasern des Fasermaterials. Dies wirkt einer Delaminierung des Bauteils entgegen und ermöglicht so eine robustere Schraubverbindung und bei dünnwandigen Bauteilen eine größere Einschraubtiefe.

Gemäß einer Weiterbildung kann die Schraubverbindung eine Direktverschraubung sein, bei der das Verbindungselement zugleich das Werkzeug zum Gewindeformen in der Befestigungsöffnung ist oder kann die Befestigungsöffnung ein vorgefertigtes Innengewinde aufweisen. Die Mittelachse der Befestigungsöffnung kann in Richtung der bereitzustellenden Schraubverbindung ausgerichtet sein.

Durch die Umlenkung des Faserverlaufs wird beim Einfurchen des Gewindes durch die Schraube während des Einschraubvorgangs der Faserverbund des Fasermaterials nicht mehr zwischen den Fasern durchtrennt, sondern im besten Fall nur orthogonal zum Faserverlauf der Fasern des Fasermaterials. Dies wirkt einer Delaminierung des Bauteils bereits bei dem Einbringen des Innengewindes entgegen.

Auch bei einem in das Bauteil eingebrachten vorgefertigten Innengewinde wird die Belastbarkeit der Schraubverbindung verbessert, weil durch die Ausrichtung des Faserverlaufs auf die Mittelachse des Tubus einerseits sowie auf die Mittelachse der Schraubverbindung andererseits im wesentlich nur Kräfte parallel zum Faserverlauf aufgenommen werden müssen.

Vorteilhafterweise kann das Fasermaterial in der mindestens einen Lage als Gewebe, Gewirke oder Gestricke ausgebildet sein, wobei insbesondere mehrere Lagen vorgesehen sind, die miteinander verbunden sind.

Diese Ausbildung des Fasermaterials begünstigt die BEreitstellung eines Bauteils mit einer Fläche. Durch die Anordnung von mehreren Lagen kann die Materialstärke des Buteils den Anforderungen gemäß eingestellt werden.

Vorteilhafterweise kann im Bereich der Befestigungsöffnung zusätzliches Fasermaterial eingebracht sein, das sowohl mit der Fläche als auch mit dem Tubus verbunden ist. Dadurch ist es möglich, gezielt eine Verstärkung des Bauteils in dem Bereich der Schraubverbindung bereitzustellen, ohne dass das ganze Bauteil eine größere Materialstärke aufweisen muss.

Das erfindungsgemäße Formteil, das aus einem Fasermaterial wie endlosfaserverstärktem ungehärtetem duroplastischen Material oder einem Gewebe, Gewirke oder Gestricke, das in eine Matrix einbindbar ist besteht, weist einen flächigen Verbindungsbereich mit parallel zu dem Verbindungsbereich verlaufenden Fasermaterial auf, über welchen eine Verbindung zu einem umgebenden Bauteil herstellbar ist. Weiterhin weist das Formteil eine Befestigungsöffnung mit einer Mittelachse auf, wobei das Fasermaterial im Bereich der Befestigungsöffnung vom Verbindungsbereich ausgehend umgelenkt ist. Durch die Umlenkung steht der Faserverlauf des Fasermaterials nach der Umlenkung in einem Winkel zum Verbindungsbereich, wobei sich der Winkel der Richtung der Mittelachse annähert. Mit dem umgelenkten Fasermaterial ist ein Tubus ausgebildet.

Das Formteil selbst ist noch nicht ausgehärtet und weist daher noch nicht die für die Schraubverbindung erforderliche Endfestigkeit auf. Derartige Formteile können beispielsweise aus Prepreg, also vorimprägnierten Fasern bestehen, die in dem unverfestigten Zustand mit in ein noch unverfestigtes Bauteil eingearbeitet werden können und zusammen mit diesem dann auf die Endfestigkeit gebracht werden, etwa durch Aushärten eines Binders in einer Matrix. Ebenso denkbar sind aber auch Formteile als reine Fasergestricke oder -gewirke, die zu einem späteren Zeitpunkt, also nach Einbringen in eine Bauteilstruktur, mit einem Binder durchtränkt und dieser dann verfestigt wird.

Vorteilhafterweise kann die Mittelachse des Tubus in Richtung einer bereitzustellenden Schraubverbindung ausgerichtet sein. Dies kann beispielsweise dadurch erreicht werden, dass ausgehend von einem flächigen Verbindungsbereich eines Gestrickes der Tubus mit einer entsprechend ausgerichteten Mittelachse angestrickt wird.

Vorteilhafterweise kann das Formteil nach dem Aushärten der Matrix einen Tubus mit einer Befestigungsöffnung bereitstellen, welche für eine Direktverschraubung geeignet ist oder kann die die Befestigungsöffnung mit einem Innengewinde versehen werden.

Ein erfindungsgemäßes Bauteil weist ein derartiges Formteil auf, welches über den Verbindungsbereich in das Bauteil integriert ist.

Durch die Integration des Formteils in das Bauteil wird sichergestellt, dass trotz geringer Wandungsstärke des Bauteils ein robuster Befestigungspunkt mit entsprechend großer Einschraubtiefe und großem erzielbarem Anziehdrehmoment der Verschraubung realisiert werden kann. Weiterhin kommen so uneingeschränkt die Vorzüge eines in Verschraubungsrichtung umgelenkten Faserverlaufs zum Tragen.

Ein erfindungsgemäßes Befestigungsteil weist ein in eine ausgehärtete Matrix eingebundenes Formteil wie vorstehend beschrieben auf, wobei der ausgehärtete Verbindungsbereich sowohl für die Herstellung einer Verbindung durch Kleben oder Laminieren als auch als Auflagebereich für ein weiteres, zu verschraubendes Bauteil verwendet werden kann.

Ein derartiges Befestigungsteil kann als eigenständiges Teil einer Schraubverbindung ausgebildet sein.

Vorteilhafterweise können am Verbindungsbereich oder am Tubus Kraftangriffsflächen vorhanden sein.

Ein weiteres erfindungsgemäßes Bauteil ist mit dem Verbindungsbereich des vorgenannten Befestigungsteils durch Kleben oder Laminieren dauerhaft verbunden.

Das Befestigungsteil kann hier für die Herstellung der Schraubverbindung in einem bereits vorgefertigten Bauteil dienen, das selbst nicht für die Aufnahme einer Schraubverbindung ausgebildet ist.

Gemäß einer vorteilhaften Weiterbildung aller erfindungsgemäßen Gegenstände kann das Fasermaterial zu mindestens 50% aus Kohlefasern bestehen. Ein derartiges Fasermaterial wird im Leichtbau verwendet und weist bei dünnen Wandstärken eine hohe Festigkeit auf.

Gemäß einer vorteilhaften Weiterbildung aller erfindungsgemäßen Gegenstände kann die Befestigungsöffnung als Durchgangsöffnung oder als Sackloch ausgebildet sein.

Im Falle eines Sacklochs können dichte Schraubverbindungen bereitgestellt werden, im Falle einer Durchgangsöffnung spielt die Länge der Schraubverbindung hingegen keine Rolle.

### Kurzbeschreibung der Zeichnung

Das erfindungsgemäße Bauteil wird anhand der Zeichnung erläutert. Es zeigen:
- Fig. 1: ein mehrlagiges flächiges Bauteil mit einer Befestigungsöffnung mit einem Befestigungsbereich in Form eines Tubus,
- Fig. 2: ein Detail des Bauteils aus Fig. 1 mit einer Befestigungsöffnung im Schnitt;
- Fig. 3A: die Befestigungsöffnung aus Fig. 2 mit eingebrachtem metrischem Innengewinde;
- Fig. 3B: die Befestigungsöffnung aus Fig. 2 mit eingebrachter Schraube einer Direktverschraubung;
- Fig. 4: die Befestigungsöffnung mit zusätzlichem Fasermaterial mit umgelenkten Fasern;
- Fig. 5A: ein Formteil aus einem Gewebe, Gewirke oder Gestricke im Teilschnitt;
- Fig. 5B: ein Formteil aus einem Gewebe, Gewirke oder Gestricke im Teilschnitt;
- Fig. 6: ein Befestigungsteil vor dem Einbringen in ein Bauteil.

### Ausführungsbeispiele der Erfindung

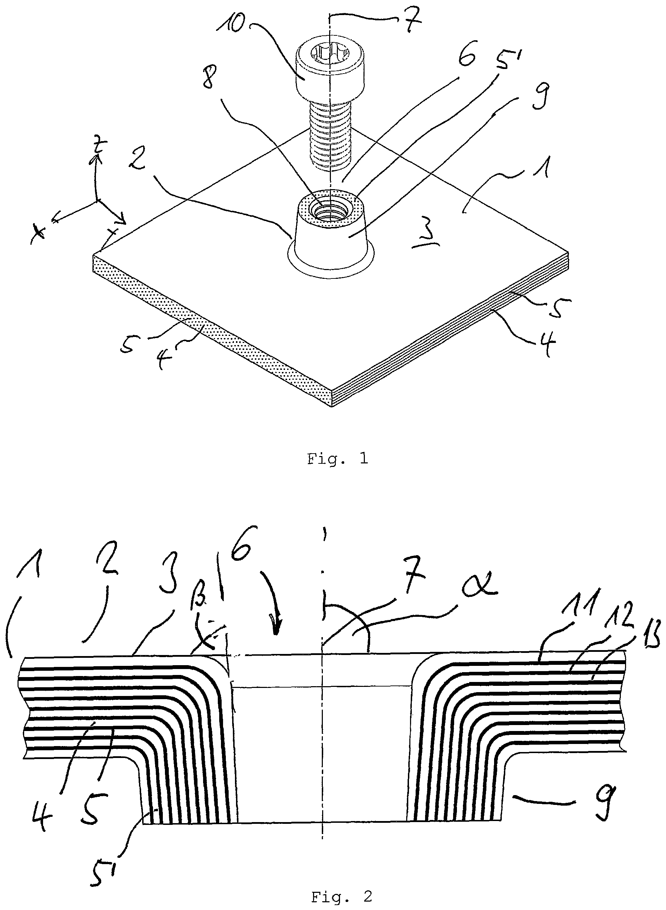

In Fig. 1 ist ein Bauteil 1 mit einem Befestigungsbereich 2 für eine Schraubverbindung gezeigt, wobei eine zur Bereitstellung der Schraubverbindung beispielhaft verwendete Schraube in einem Abstand zu dem Befestigungsbereich 2 gestrichelt dargestellt ist. Vorteilhafterweise erfolgt die Verschraubung im Regelfall jedoch in entgegengesetzter Richtung.

Das Bauteil 1 weist eine sich in einer x-y-Ebene erstreckende Fläche 3 mit in mindestens einer Lage in eine Matrix 4 eingebettetes und mittels eines Binders eingebundenes Fasermaterial 5 auf, wobei das Fasermaterial 5 einen Faserverlauf im wesentlichen parallel zu der Fläche 3 aufweist, was unabhängig davon ist, ob die Fläche 3 gekrümmt ist oder nicht.

Die Fläche 3 weist eine Befestigungsöffnung 6 mit einer in einem Winkel alpha (Fig. 2) zur Fläche 3 angeordneten Mittelachse 7 auf, wobei die Befestigungsöffnung 6 im gezeigten Beispiel mit einem Innengewinde 8 versehen ist, das aber nicht zwingend vorhanden sein muss. Im Befestigungsbereich der Befestigungsöffnung 6 erfolgt von der Fläche 3 ausgehend eine Umlenkung des parallel zu der Fläche 3 liegenden Fasermaterials 5 derart, dass der Faserverlauf des Fasermaterials 5 nach der Umlenkung in einem Winkel beta (Fig. 2) zur Fläche 3 steht, der sich der Richtung der Mittelachse 7 annähert. Dabei ist mit dem umgelenkten Fasermaterial 5 ein Tubus 9 ausgebildet, der über die Fläche 3 hervorsteht.

Die Mittelachse 7 der Befestigungsöffnung 6 ist in Richtung der bereitzustellenden Schraubverbindung mit der Schraube 10 ausgerichtet und zwar auch dann, wenn die Befestigungsöffnung 6 anders als dargestellt kein vorgefertigtes Innengewinde 8 aufweist, sondern eine Direktverschraubung ist, bei der das Verbindungselement zugleich das Werkzeug zum Gewindeformen in der Befestigungsöffnung 6 ist.

Wie im Schnitt des Bauteils 1 in Fig. 2 dargestellt, ist das Fasermaterial 5 in mehreren Lagen 11, 12, 13 usw. ausgebildet und findet im Befestigungsbereich 2 um die Befestigungsöffnung 6 herum eine Umlenkung des Fasermaterials 5 von der Fläche 3 in den Tubus 9 statt, was mit dem neuen Bezugszeichen 5' für das umgelenkte Fasermaterial verdeutlicht wird. Die Mittelachse 7 der Befestigungsöffnung 6 steht im vorliegenden Fall senkrecht auf der Fläche 3, es können jedoch auch andere Winkel für eine Schraubverbindung vorgesehen sein. Der Tubus 9 mit dem umgelenkten Fasermaterial 5' steht in einem Winkel beta zur Fläche 3, wobei der Winkel beta im wesentlichen dem Winkel alpha entspricht, d.h. die Abweichung ist kleiner als 30°

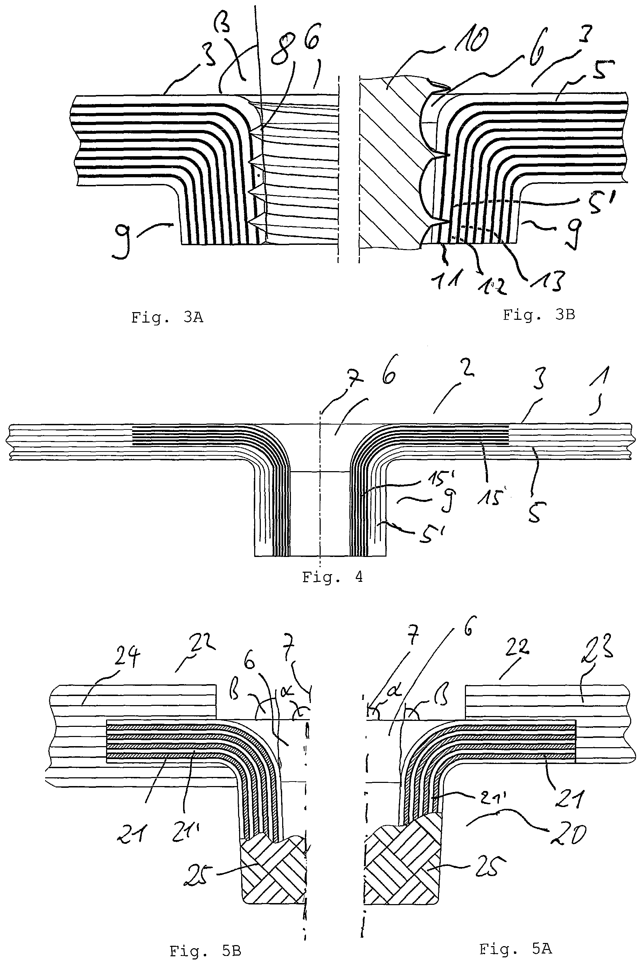

In Fig. 3A ist der Tubus 9 aus Fig. 2 mit in die Befestigungsöffnung 6 eingebrachtem metrischen Innengewinde 8 dargestellt, wobei das Gewinde wegen der Schräge des Tubus 9 mit dem Winkel beta gegenüber der Fläche 3 nicht über die gesamte Höhe des Tubus 9 vollständig ausgebildet ist.

Es ist zu erkennen, dass das eingebrachte Gewinde 8 im Gewindegrund zwar in das Fasermaterial 5' eindringt, dass dieses Fasermaterial 5' aber im Lastfall hauptsächlich in Richtung des Faserverlaufs belastet wird.

Dies wird noch deutlicher in Fig. 3B, in der in die Befestigungsöffnung 6 eine Schraube 10 mit einem Gewinde für eine Direktverschraubung eingebracht ist. Die Gewindespitzen der Schraube 10 haben sich in das gegenüber dem Fasermaterial 5 in der Fläche 3 umgelenkte Fasermaterial 5' des Tubus 9 eingegraben, ohne dabei den Faserverbund aufzuspalten, da das Eindringen der Gewindespitzen im wesentlichen senkrecht zum Faserverlauf der mehreren Lagen 11-13 im Tubus 9 erfolgt.

In Fig. 4 ist eine Befestigungsöffnung 6 als Durchgangsöffnung dargestellt, wobei zusätzliches Fasermaterial 15 vorgesehen ist, das sich von dem Befestigungsbereich 2 in den Tubus 9 hinein erstreckt und das sowohl mit der Fläche 3 als auch mit dem Tubus 9 verbunden ist. Dieses zusätzliche Fasermaterial 15 erlaubt es, den Tubus 9 zu verlängern, ohne durch das im Bauteil 1 in der Fläche 3 vorhandene Fasermaterial 5 begrenzt zu sein.

In Fig. 5A, 5B ist ein Formteil 20 aus einem Fasermaterial 21, 21 wie endlosfaserverstärktem ungehärteten duroplastischen Material, das auch als Prepreg bezeichnet wird oder einem Gewebe, Gewirke oder Gestricke, das in einem späteren Bearbeitungsschritt eine Matrix einbindbar ist, in einem Teilschnitt dargestellt. Über einen flächigen Verbindungsbereich 22 mit parallel zu dem Verbindungsbereich 22 verlaufenden Fasermaterial 21 ist eine Verbindung zu einem umgebenden Bauteil 23, 24 hergestellt, indem wie beim Bauteil 23 aus Fig. 5A das Fasermaterial 21 des Verbindungsbereichs 22 einseitig in das Fasermaterial des Bauteils 23 eingebunden ist, wohingegen beim Bauteil 24 aus Fig. 5B das Fasermaterial 21 des Verbindungsbereichs 22 beidseitig in das Fasermaterial des Bauteils 24 eingebunden ist. Dies geschieht abhängig von der Wirkrichtung der in das Bauteil einzuleitenden Kräfte. Das Formteil 20 stellt für das umgebende Bauteil 24 einen Befestigungspunkt für eine Schraubverbindung dar. Im Ausführungsbeispiel nach Fig. 5A werden die Kräfte vorrangig als Zugkräfte in den Befestigungspunkt eingeleitet. Im Ausführungsbeispiel nach Fig. 5B können die Kräfte sowohl als Zugkräfte, aber auch als Druck- bzw. Schubkräfte über den Befestigungspunkt in das Bauteil eingeleitet werden.

Das Formteil weist eine Befestigungsöffnung 6 mit einer Mittelachse 7 auf und das Fasermaterial 21 ist im Bereich der Befestigungsöffnung 6 vom Verbindungsbereich 22 ausgehend umgelenkt ist, so dass der Faserverlauf des Fasermaterials 21 nach der Umlenkung in einem Winkel beta zum Verbindungsbereich 22 steht, der sich der Richtung der Mittelachse 7 mit einem Winkel alpha zum Verbindungsbereich 22 annähert. und dass mit dem umgelenkten Fasermaterial ein Tubus 25 ausgebildet ist. Die Mittelachse 7 der Befestigungsöffnung 6 ist in Richtung einer bereitzustellenden Schraubverbindung ausgerichtet und kann als Durchgangsöffnung oder als verschlossenes Sachloch ausgebildet sein.

Das Formteil stellt nach dem Aushärten der Matrix 22 eine Befestigungsöffnung 6 bereit, welche für eine Direktverschraubung geeignet ist, bei der das Verbindungselement zugleich das Werkzeug zum Gewindeformen in der Befestigungsöffnung 6 ist oder welche mit einem Innengewinde versehen werden kann.

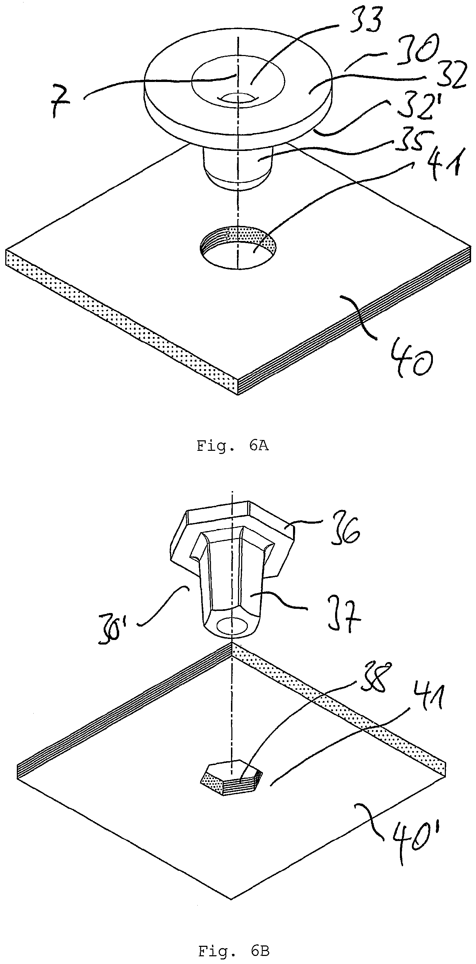

Fig. 6A zeigt ein Befestigungsteil 30 mit einer Befestigungsöffnung 33 vor dem Einbringen in ein Bauteil 40 mit einem Befestigungsbereich 41 für eine später herzustellende Schraubverbindung entlang der Mittelachse 7. Je nach Bedarf kann das Einbinden in die Bauteilstruktur sowohl durch ein mehrlagiges Laminieren ähnlich Fig. 5A, 5B, aber auch durch ein Verkleben der Ober- oder Unterseite des Verbindungsbereiches 32, 32' mit dem Bauteil 40 erfolgen.

Das Befestigungsteil 30 weist ein in eine ausgehärtete Matrix eingebundenes Formteil mit einem Verbindungsbereich auf, wobei der ausgehärtete Verbindungsbereich 32 sowohl für die Herstellung einer Verbindung durch Kleben oder Laminieren mit dem Bauteil 40 als auch als Auflagebereich an das Bauteil 40 ausgebildet ist.

In Fig. 6B sind am Verbindungsbereich 32 oder am Tubus 35 vorhandene Kraftangriffsflächen 36, 37 dargestellt, wobei die Kraftangriffsflächen 37 am Tubus 35 mit entsprechenden Gegenflächen des Befestigungsbereichs 41 zusammenwirken, wenn das Befestigungsteil 30' in das Bauteil 40' eingebracht ist.

Es erschließt sich ohne weiteres, dass das Bauteil mit dem Verbindungsbereich des Befestigungsteils durch Kleben oder Laminieren dauerhaft verbunden werden kann.

Grundsätzlich sind als Richtung für die Schraubverbindung beide Richtungen entlang der Mittelachse 7 vorstellbar. Bei einer Schraubverbindung von oben nach unten wäre das Befestigungsteil allerdings von unten mit dem Bauteil 40 zu verbinden. Dem Konstrukteur sind aber alle Freiheiten gegeben, auch die Befestigungsöffnung als Durchgangsöffnung oder als Sackloch ausgebildet ist.

## Patentansprüche

1. Bauteil (1) mit einem Befestigungsbereich (2) für eine Schraubverbindung, wobei das Bauteil (1) eine Fläche (3) mit in mindestens einer Lage in eine Matrix (4) eingebettetes Fasermaterial (5) aufweist, wobei das Fasermaterial (5) einen Faserverlauf im wesentlichen parallel zu der Fläche (3) aufweist, wobei die Fläche (3) im Befestigungsbereich (2) eine Befestigungsöffnung (6) mit einer in einem Winkel alpha zur Fläche (3) angeordneten Mittelachse (7) aufweist, wobei die Befestigungsöffnung (6) für ein Innengewinde (8) vorgesehen ist, **dadurch gekennzeichnet, dass** im Bereich der Befestigungsöffnung (6) von der Fläche (3) ausgehend eine Umlenkung des parallel zu der Fläche (3) liegenden Fasermaterials (5) im Befestigungsbereich (2) derart erfolgt, dass der Faserverlauf des Fasermaterials (5) nach der Umlenkung in einem Winkel beta zur Fläche (3) steht, der sich der Richtung der Mittelachse (7) annähert und dass mit dem umgelenkten Fasermaterial (5') ein Tubus (9) ausgebildet ist.

2. Bauteil nach Anspruch 1, **dadurch gekennzeichnet, dass** die Schraubverbindung eine Direktverschraubung mit einem Verbindungselement (10) ist, bei der das Verbindungselement (10) zugleich das Werkzeug zum Gewindeformen in der Befestigungsöffnung (6) am Tubus (9) ist oder dass der Tubus (9) ein vorgefertigtes Innengewinde (8) aufweist und dass die Mittelachse (7) des Tubus (9) in Richtung der bereitzustellenden Schraubverbindung ausgerichtet ist.

3. Bauteil nach einem der Ansprüche 1 bis 2, **dadurch gekennzeichnet, dass** das Fasermaterial (5) in der mindestens einen Lage als Gewebe, Gewirke oder Gestricke ausgebildet ist, wobei insbesondere mehrere Lagen (11 - 13) vorgesehen sind, die miteinander verbunden sind.

4. Bauteil (23, 24) nach einem der Ansprüche 1 bis 3, **dadurch gekennzeichnet, dass** im Befestigungsbereich (2) der Befestigungsöffnung (6) zusätzliches Fasermaterial (15) eingebracht ist, das sowohl mit der Fläche (3) als auch mit dem Tubus (9) verbunden ist.

5. Formteil (20) aus einem Fasermaterial (21) wie endlosfaserverstärktem ungehärtetem duroplastischen Material oder einem Gewebe, Gewirke oder Gestricke, das in eine Matrix einbindbar ist, **dadurch gekennzeichnet, dass** ein flächiger Verbindungsbereich (22) mit parallel zu dem Verbindungsbereich (22) verlaufenden Fasermaterial (5) vorhanden ist, über welches eine Verbindung zu einem umgebenden Bauteil (23, 24) herstellbar ist, dass das Formteil (20) eine Befestigungsöffnung (6) mit einer Mittelachse (7) aufweist und dass das Fasermaterial (21) im Bereich der Befestigungsöffnung (6) vom Verbindungsbereich (22) ausgehend in einen Tubus (9) umgelenkt ist, so dass der Faserverlauf des Fasermaterials (21) nach der Umlenkung in einem Winkel beta zum Verbindungsbereich (22) steht, der sich der Richtung der Mittelachse (7) annähert und dass mit dem umgelenkten Fasermaterial (21') ein Tubus (25) ausgebildet ist.

6. Formteil (20) nach Anspruch 5, **dadurch gekennzeichnet, dass** die Mittelachse (7) des Tubus (25) in Richtung einer bereitzustellenden Schraubverbindung ausgerichtet ist.

7. Formteil nach Anspruch 6, **dadurch gekennzeichnet, dass** das Formteil nach dem Aushärten der Matrix einen Tubus (25) mit einer Befestigungsöffnung (6) bereitstellt, welche für eine Direktverschraubung geeignet ist, bei der das Verbindungselement (10) zugleich das Werkzeug zum Gewindeformen in der Befestigungsöffnung (6) ist oder dass die Befestigungsöffnung (6) mit einem Innengewinde (8) versehen werden kann.

8. Bauteil (23, 24) mit einem Befestigungsbereich (2) für eine Schraubverbindung, **gekennzeichnet durch** ein Formteil (20) nach einem der Ansprüche 5 bis 7, wobei das Formteil (20) über den Verbindungsbereich vollständig in das Bauteil (23, 24) integriert ist.

9. Befestigungsteil, **gekennzeichnet durch** ein in eine ausgehärtete Matrix eingebundenes Formteil nach einem der Ansprüche 5 bis 7, wobei ein ausgehärteter Verbindungsbereich (32) sowohl für die Herstellung einer Verbindung durch Kleben oder Laminieren als auch als Auflagebereich ausgebildet ist.

10. Befestigungsteil nach Anspruch 9, **dadurch gekennzeichnet, dass** am Verbindungsbereich (32) oder am Tubus (35) Kraftangriffsflächen (36, 37) vorhanden sind.

11. Bauteil (40) mit einem Befestigungsteil (30) nach Anspruch 9 oder 10, **dadurch gekennzeichnet, dass** das Bauteil (40) mit dem Verbindungsbereich (32) des Befestigungsteils (30) durch Kleben oder Laminieren dauerhaft verbunden ist.

12. Bauteil, Formteil oder Befestigungsteil nach einem der Ansprüche 1 bis 11, **dadurch gekennzeichnet, dass** das Fasermaterial (5; 21) zu mindestens 50% aus Kohlefasern besteht.

13. Bauteil, Formteil oder Befestigungsteil nach einem der Ansprüche 1 bis 12, **dadurch gekennzeichnet, dass** die Befestigungsöffnung (6; 33) als Durchgangsöffnung oder geschlossen ausgebildet ist.

## Claims

1. A structural element (1) having a fixing region (2) for a screw connection, wherein said structural element (1) has a surface (3) comprising fibrous material (5) embedded in a matrix (4)in at least one layer, wherein said fibrous material (5) has a fiber orientation which is essentially parallel to said surface (3), wherein said surface (3) in said fixing region (2) has a mounting aperture (6) of which the center axis (7) is disposed at an angle alpha relative to said surface (3), said mounting aperture (6) being provided for a female thread (8), **characterized in that** in the region of said mounting aperture (6), starting from said surface (3), a deflection of said fibrous material (5) situated parallel to said surface (3) takes place in said fixing region (2) in such a manner that the fiber orientation of said fibrous material (5) is, subsequently to said deflection, disposed at an angle beta relative to said surface (3) as is approximately equal to the direction of said center axis (7), and that a tubus (9) is formed by way of said deflected fibrous material (5).

2. A structural element as claimed in claim 1, **characterized in that** said screw connection is a direct screw connection comprising a coupling element (10), which coupling element (10) is at the same time the thread-forming tool in said mounting aperture (6) in said tubus (9) or that said tubus (9) has a pre-formed female thread (8) and that said center axis (7) of said tubus (9) is oriented in the direction of the screw connection to be provided.

3. A structural element as claimed in claims 1 to 2, **characterized in that** said fibrous material (5) is opened out and continued so as to form woven, knitted, or crocheted material in said at least one layer, wherein, in particular, a plurality of layers (11-13) is provided, which layers are interconnected.

4. A structural element (23,24) as claimed in claims 1 to 3, **characterized in that** additional fibrous material (15) is introduced in said fixing region (2) of said mounting aperture (6), said additional fibrous material being attached to both said surface (3) and said tubus (9).

5. A molded article (20) consisting of a fibrous material (21) such as continuous fiber-reinforced uncured duroplastic material or a woven, knitted, or crocheted material which is capable of being integrated in a matrix, **characterized in that** a flat connecting region (22) comprising fibrous material (5) running parallel to said connecting region (22) is present, by means of which attachment to a surrounding structural element (23,24) can be attained, that said molded article (20) has a mounting aperture (6) having a center axis (7), and that said fibrous material (21) is deflected to form a tubus (9) in the region of said mounting aperture (6), starting from said connecting region (22), such that the fiber orientation of said fibrous material (21) is disposed, following said deflection, at an angle beta relative to said connecting region (22), which angle is approximately equal to the direction of said center axis (7) and that a tubus (25) is formed by way of said diverted fibrous material (21).

6. A molded article (20) as claimed in claim 5, **characterized in that** said center axis (7) of said tubus (25) is oriented in the direction of a screw connection to be provided.

7. A molded article as claimed in claim 6, **characterized in that**, following curing of said matrix, said molded article provides a tubus (25) having a mounting aperture (6) which is suitable for a direct screw connection, said coupling element (10) being at the same time the thread-forming tool in said mounting aperture (6), or that said mounting aperture (6) can be provided with a female thread (8).

8. A structural element (23,24) having a fixing region (2) for a screw connection, **characterized by** a molded article (20) as claimed in claims 5 to 7, wherein said molded article (20) is completely integrated in said structural element (23,24) by way of said connecting region.

9. A securing element, **characterized by** a molded article integrated in a cured matrix as claimed in claims 5 to 7, wherein a cured connecting region (32) is formed so as to allow for attachment both by adhesion or lamination, and by use of a support area.

10. A securing element as claimed in claim 9, **characterized in that** force contact surfaces (36,37) are present in said connecting region (32) or in said tubus (35).

11. A structural element (40) having a securing element (30) as claimed in claim 9 or claim 10, **characterized in that** said structural element (40) is permanently attached to said connecting region (32) of said fixing element (30) by adhesion or lamination.

12. A structural element, molded article, or securing element as claimed in claims 1 to 11, **characterized in that** said fibrous material (5;21) consists of carbon fibers to an extent of at least 50 %.

13. A structural element, molded article, or securing element as claimed in claims 1 to 12, **characterized in that** said mounting aperture (6;33) is formed as a through passageway or as a solid element.

## Revendications

1. Elément (1) avec une zone de fixation (2) pour un raccord à vis, l'élément (1) comportant une surface (3) avec du matériau en fibres (5) incorporé dans au moins une couche dans une matrice (4), le matériau en fibres (5) comportant une allure de fibres pour l'essentiel parallèle à la surface (3), la surface (3) dans la zone de fixation (2) comportant une ouverture de fixation (6) avec un axe central (7) disposé dans un angle α par rapport à la surface (3), l'ouverture de fixation (6) étant prévue pour un filetage intérieur (8), **caractérisé en ce que** dans la zone de l'ouverture de fixation (6) en partant de la surface (3) une déviation du matériau en fibres (5) situé parallèlement à la surface (3) a lieu dans la zone de fixation (2) de telle sorte que l'allure des fibres du matériau en fibres (5) se trouve après la déviation dans un angle β par rapport à la surface (3) qui s'approche de la direction de l'axe central (7) et **en ce qu'**un tube (9) est constitué avec le matériau en fibres dévié (5').

2. Elément selon la revendication 1, **caractérisé en ce que** le raccord à vis est un vissage direct avec un élément de liaison (10), pour lequel l'élément de liaison (10) est simultanément l'outil pour former les filets dans l'ouverture de fixation (6) sur le tube (9) ou **en ce que** le tube (9) comporte un filetage intérieur (8) préfabriqué et **en ce que** l'axe central (7) du tube (9) est orienté en direction du raccord à vis à établir.

3. Elément selon l'une quelconque des revendications 1 à 2, **caractérisé en ce que** le matériau en fibres (5) est constitué dans au moins une couche comme un matériau tissé, maillé ou tricoté, plusieurs couches (11-13) étant en particulier prévues qui sont reliées entre elles.

4. Elément (23, 24) selon l'une quelconque des revendications 1 à 3, **caractérisé en ce que** dans la zone de fixation (2) de l'ouverture de fixation (6) est incorporé un matériau en fibres (15) supplémentaire qui est relié aussi bien avec la surface (3) qu'avec le tube (9).

5. Pièce moulée (20) à partir d'un matériau en fibres (21) comme un matériau renforcé à la fibre continue, non durci, thermodurcissable ou un matériau tissé, maillé, ou tricoté, qui peut être lié dans une matrice, **caractérisé en ce qu'**il y a une zone de liaison plane (22) avec un matériau en fibres (5) passant parallèlement à la zone de liaison (22), sur laquelle une liaison à un élément (23, 24) englobant peut être établie, **en ce que** la pièce moulée (20) comporte une ouverture de fixation (6) avec un axe central (7) et **en ce que** le matériau en fibres (21) dans la zone de l'ouverture de fixation (6) est dévié en partant de la zone de liaison (22) dans un tube (9) de telle sorte que l'allure des fibres du matériau en fibres (21) se trouve après la déviation dans un angle β par rapport à la zone de liaison (22), qui s'approche de la direction de l'axe central (7) et **en ce qu'**un tube (25) est constitué avec le matériau en fibres dévié (21').

6. Pièce moulée (20) selon la revendication 5, **caractérisé en ce que** l'axe central (7) du tube (25) est orienté en direction d'un raccord à vis à établir.

7. Pièce moulée selon la revendication 6, **caractérisé en ce que** la pièce moulée fournit après durcissement de la matrice un tube (25) avec une ouverture de fixation (6), laquelle est adaptée à un vissage direct pour lequel l'élément de liaison (10) est simultanément l'outil pour former des filets dans l'ouverture de fixation (6) ou **en ce que** l'ouverture de fixation (6) peut être dotée d'un filetage intérieur (8).

8. Elément (23, 24) avec une zone de fixation (2) pour un raccord à vis, **caractérisé par** une pièce moulée (20) selon l'une quelconque des revendications 5 à 7, la pièce moulée (20) étant intégrée complètement par le biais de la zone de liaison dans l'élément (23, 24).

9. Pièce de fixation, **caractérisée par** une pièce moulée intégrée dans une matrice durcie selon l'une quelconque des revendications 5 à 7, une zone de liaison (32) durcie étant constituée tant pour la réalisation d'une liaison par collage ou laminage que comme zone d'appui.

10. Pièce de fixation selon la revendication 9, **caractérisée en ce que** sur la zone de liaison (32) ou sur le tube (35), il y a des surfaces d'application de force (36, 37).

11. Elément (40) avec une pièce de fixation (30) selon la revendication 9 ou 10, **caractérisé en ce que** l'élément (40) est relié de façon permanente à la zone de liaison (32) de la pièce de fixation (30) par collage ou laminage.

12. Elément, pièce moulée ou pièce de fixation selon l'une quelconque des revendications 1 à 11, **caractérisé en ce que** le matériau en fibres (5 ; 21) est composé au moins de 50% de fibres de carbone.

13. Elément, pièce moulée ou pièce de fixation selon l'une quelconque des revendications 1 à 12, **caractérisé en ce que** l'ouverture de fixation (6 ; 33) est constituée comme ouverture de passage ou fermée.
